# EUROPÄISCHE PATENTANMELDUNG

(11) **EP 3 633 112 A1**
(43) Veröffentlichungstag der Anmeldung: **08.04.2020**
(21) Anmeldenummer: 19197726.3
(22) Anmeldetag: 17.09.2019
(51) Int. Cl.: E03C 1/02, F16L 5/10

(54) **ABDICHTUNGSSET UND VERFAHREN ZUM ABDICHTEN EINER WASSERLEITUNG IM BEREICH EINER HERZUSTELLENDEN WANDDURCHFÜHRUNG SOWIE VERWENDUNG EINES SOLCHEN ABDICHTUNGSSETS**

(30) Priorität: 01.10.2018 DE 102018124233
(71) Anmelder: Viega Technology GmbH & Co. KG, 57439 Attendorn (DE)
(72) Erfinder: ARENS, Klaus, 57482 Wenden (DE)
(74) Vertreter: Cohausz & Florack

(57) **Zusammenfassung**

Die Erfindung betrifft ein Abdichtungsset sowie ein Verfahren zum Abdichten einer Wasserleitung (2) im Bereich einer herzustellenden Wanddurchführung, wobei die Wasserleitung mit einem Anschlussstutzen (3.4) zum Anschluss einer wandaußenseitig zugänglichen Sanitärarmatur versehen ist. Das Abdichtungsset umfasst eine auf den Anschlussstutzen (3.4) dichtend montierbare Dichthülse (11), einen Dichtstopfen (9) zum temporären wasserdichten Verschließen des Anschlussstutzens (3.4), wobei der Dichtstopfen (9) innerhalb der Dichthülse (11) anordenbar ist, und eine Leitungsverlängerung (6) zum Verlängern des Anschlussstutzens (3.4) und zum Anschluss der Sanitärarmatur, wobei nach Lösen des Dichtstopfens (9) von dem Anschlussstutzen (3.4) und Entfernen des Dichtstopfens (9) aus der Dichthülse (11) die Leitungsverlängerung (6) innerhalb der Dichthülse (11) anordenbar und mit dem Anschlussstutzen (3.4) verbindbar ist, und wobei die Leitungsverlängerung (6) einen Außendurchmesser aufweist, der kleiner ist als der Innendurchmesser der Dichthülse (11), so dass sich nach Verbinden der Leitungsverlängerung mit dem Anschlussstutzen ein Spalt (14) zwischen der Dichthülse (11) und der Leitungsverlängerung (6) ergibt. Um auf einfache Weise eine verbesserte Abdichtung sowie eine verbesserte Abstützung der Sanitärarmatur zu erreichen, umfasst das Abdichtungsset erfindungsgemäß zudem mindestens ein in den Spalt (14) einbringbares Dichtmittel (15).

## Beschreibung

Die Erfindung betrifft ein Abdichtungsset sowie ein Verfahren zum Abdichten einer Wasserleitung im Bereich einer herzustellenden Wanddurchführung, wobei die Wasserleitung mit einem Anschlussstutzen zum Anschluss einer wandaußenseitig zugänglichen Sanitärarmatur versehen ist. Des Weiteren betrifft die Erfindung eine Verwendung eines Abdichtungssets zum Abdichten einer Wasserleitung im Bereich einer herzustellenden Wanddurchführung, wobei die Wasserleitung mit einem Anschlussstutzen zum Anschluss einer wandaußenseitig zugänglichen Sanitärarmatur versehen wird.

Wasserleitungen zur Versorgung von Zapfstellen wie z. B. Wasserhähne oder dergleichen werden heutzutage regelmäßig als Unterputzleitungen ausgeführt. Sehr häufig werden solche Unterputzleitungen auch in Vorwandinstallationen angeordnet. Bevor die Unterputzleitungen mit Innenputz oder Gipskartonplatten verkleidet werden, wird an dem Leitungsnetz üblicherweise ein Drucktest durchgeführt, um mögliche Leckagen an Leitungsverbindungsstellen zu orten und die Leckagestelle durch eine geeignete Maßnahme, z. B. durch dichtendes Verpressen eines Pressfittings, zu beseitigen. Für den Drucktest wird der für die jeweilige Zapfstelle vorgesehene Anschlussstutzen mit einem Dichtstopfen verschlossen. Der Dichtstopfen - auch als Baustopfen bezeichnet - hat eine axiale Länge, die so bemessen ist, dass der Dichtstopfen über eine nachfolgend hergestellte Abdichtungsebene hinaus soweit in den Raum vorsteht, dass auf den Dichtstopfen eine Dichtmanschette aufgezogen und diese dann anschließend mit Fliesen oder Naturstein, erforderlichenfalls unter Zwischenanordnung einer Dichtfolie, dichtend abgedeckt werden kann. Nachdem der Fliesen- oder Natursteinbelag fertiggestellt ist, wird der Dichtstopfen (Baustopfen) entfernt und eine Leitungsverlängerung, die auch als Hahnverlängerung bezeichnet wird, an dem Anschlussstutzen angeschlossen. Die Leitungsverlängerung wird meist so gewählt, dass sie im montierten Zustand an der Außenseite des Fliesen- oder Natursteinbelages bündig abschließt oder nahe an der Außenseite endet. Dabei besteht jedoch das Problem, dass eine möglicherweise undichte Verbindung der Leitungsverlängerung mit dem Anschlussstutzen nicht unmittelbar bemerkt wird und austretendes Leckagewasser zu Schäden in der Wand bzw. Vorwand führen kann.

Zur Lösung dieses Problem wurde in der DE 10 2016 205 457 A1 ein Abdichtungsset vorgeschlagen, welches ein Mantelrohr, einen Dichtstopfen und eine Dichtmanschette umfasst. Das Mantelrohr, das auch als Dichthülse bezeichnet werden kann, ist zumindest teilweise elastisch ausgebildet und mit einer Unterputz-Wasserleitung derart verbindbar, dass eine Dichtfläche am Umfang zwischen Wasserleitung und Mantelrohr erzielbar ist und das Mantelrohr sich konzentrisch zur Wasserleitung über die Verbindungsstelle der Wasserleitung hinweg erstreckt. Der Dichtstopfen ist in der Dichtposition lösbar mit der Verbindungsstelle der Wasserleitung verbindbar, so dass die Wasserleitung dadurch abgedichtet werden kann. Die Dichtmanschette wird auf das Mantelrohr aufgezogen. Hierzu hat die Dichtmanschette eine Öffnung für das Mantelrohr und eine Flügelfläche, die im auf dem Mantelrohr angebrachten Zustand der Dichtmanschette radial vom Mantelrohr absteht und parallel zu einer Leichtbauwand, die die Wasserleitung abdeckt, angeordnet wird. Das Mantelrohr ist auf die Wasserleitung aufsteckbar und abschneidbar ausgebildet, so dass seine Länge an die Ebene der Leichtbauwand oder die Ebene eines darauf angebrachten Fliesenbelages angepasst werden kann. Des Weiteren umfasst dieses Abdichtungsset eine Leitungsverlängerung, nämlich ein Verlängerungsstück, durch welches die Unterputz-Wasserleitung nach Entfernen des Dichtstopfens verlängert werden kann. An das Verlängerungsstück kann dann eine wandaußenseitig zugängliche Sanitärarmatur, z. B. ein Wasserhahn montiert werden.

Das in der DE 10 2016 205 457 A1 beschriebene Abdichtungsset soll eine einfache und sichere Abdichtung einer Unterputzarmaturleitung ermöglichen. Unbefriedigend an diesem Abdichtungsset ist jedoch der Umstand, dass der Außendurchmesser des Verlängerungsstücks sowie der Außendurchmesser des Dichtstopfens (Baustopfen) deutlich kleiner als der Innendurchmesser des Mantelrohres sein muss. Somit ergibt sich zwischen Mantelrohr und Verlängerungsstück ein nicht unerheblicher Ringspalt, über den bei einer möglicherweise undichten Verbindung des Verlängerungsstücks mit der Unterputz-Wasserleitung austretendes Leckagewasser zwar in Richtung der wandaußenseitig angeordneten Sanitärarmatur fließen kann. Nachteilig an dem Ringspalt ist jedoch, dass die an dem Verlängerungsstück montierte Sanitärarmatur, z. B. ein Wasserhahn, keinen ausreichend stabilen Halt hat und bei ihrer manuellen Benutzung mitunter wackelt. Des Weiteren können zwischen dem Mantelrohr und dem Oberflächenbereich der Unterputz-Wasserleitung, auf den das Mantelrohr aufgesteckt ist, Undichtigkeiten auftreten, da die Oberfläche herkömmlicher Anschlussstutzen bzw. Wandscheiben, welche aus Metallguss, insbesondere Rotguss hergestellt werden, eine Rauheit aufweisen, die für die Erzielung einer wasserdichten Abdichtung ungünstig ist. Über eine solche Undichtigkeit kann nicht nur Leckagewasser, welches möglicherweise an einer undichten Verbindung zwischen Verlängerungsstück und Unterputz-Wasserleitung austritt, sondern auch Leckagewasser, welches möglicherweise an einer undichten Verbindung zwischen Verlängerungsstück und Sanitärarmatur austritt, in die Wand gelangen.

Der vorliegenden Erfindung liegt die Aufgabe zugrunde, ein Abdichtungsset sowie ein Verfahren der eingangs genannten Art anzugeben, die auf einfache Weise eine verbesserte Abdichtung sowie eine verbesserte Abstützung der Sanitärarmatur ermöglichen.

Gelöst wird diese Aufgabe durch ein Abdichtungsset mit den in Anspruch 1 angegebenen Merkmalen bzw. durch ein Verfahren mit den in Anspruch 10 angegebenen Merkmalen. Bevorzugte und vorteilhafte Ausgestaltungen der Erfindung sind in den Unteransprüchen angegeben.

Das erfindungsgemäße Abdichtungsset umfasst eine auf den Anschlussstutzen dichtend montierbare Dichthülse, einen Dichtstopfen zum temporären wasserdichten Verschließen des Anschlussstutzens, wobei der Dichtstopfen innerhalb der Dichthülse anordenbar ist, und eine Leitungsverlängerung zum Verlängern des Anschlussstutzens und zum Anschluss der wandaußenseitig zugänglichen Sanitärarmatur, wobei nach Lösen des Dichtstopfens von dem Anschlussstutzen und Entfernen des Dichtstopfens aus der Dichthülse die Leitungsverlängerung innerhalb der Dichthülse anordenbar und mit dem Anschlussstutzen verbindbar ist, und wobei die Leitungsverlängerung einen Außendurchmesser aufweist, der kleiner ist als der Innendurchmesser der Dichthülse, so dass sich nach Verbinden der Leitungsverlängerung mit dem Anschlussstutzen ein Spalt zwischen der Dichthülse und der Leitungsverlängerung ergibt. Zudem umfasst das erfindungsgemäße Abdichtungsset mindestens ein in den Spalt einbringbares Dichtmittel.

Durch das mindestens eine Dichtmittel lässt sich der Spalt zwischen Dichthülse und Leitungsverlängerung auf einfache Weise je nach Bedarf teilweise oder vollständig abdichten. Zudem lässt sich hierdurch auf einfache Weise eine verbesserte Abstützung der Sanitärarmatur erzielen.

Das erfindungsgemäße Verfahren umfasst dementsprechend die Schritte:
Montieren einer Dichthülse auf dem Anschlussstutzen, so dass die Dichthülse den Anschlussstutzen wasserdicht einfasst und von dem Anschlussstutzen in Richtung der herzustellenden Wanddurchführung vorsteht,
Verbinden einer Leitungsverlängerung mit dem Anschlussstutzen, um den Anschlussstutzen für den Anschluss der Sanitärarmatur zu verlängern, wobei die Leitungsverlängerung innerhalb der auf dem Anschlussstutzen montierten Dichthülse angeordnet wird, und wobei die Leitungsverlängerung einen Außendurchmesser aufweist, der kleiner ist als der Innendurchmesser der Dichthülse, so dass sich nach Verbinden der Leitungsverlängerung mit dem Anschlussstutzen ein Spalt zwischen der Dichthülse und der Leitungsverlängerung ergibt, und
Einbringen mindestens eines Dichtmittels in den Spalt zwischen der Dichthülse und der Leitungsverlängerung.

Die Dichthülse des erfindungsgemäßen Abdichtungssets ist vorzugsweise so ausgeführt, dass sie auf den Anschlussstutzen dichtend aufsteckbar oder dichtend aufschraubbar ist. Alternativ könnte das Abdichtungsset zusätzlich ein Klemmelement umfassen, mittels dem die Dichthülse dichtend auf den Anschlussstutzen festgeklemmt werden kann.

In einer bevorzugten Ausgestaltung umfasst das erfindungsgemäße Verfahren des Weiteren den (optionalen) Schritt, bei dem ein temporäres wasserdichtes Verschließen des Anschlussstutzens mittels eines Dichtstopfens erfolgt, wobei der Dichtstopfen hierzu vor dem Verbinden der Leitungsverlängerung mit dem Anschlussstutzen innerhalb der Dichthülse angeordnet wird.

Ferner umfasst eine bevorzugte Ausgestaltung des erfindungsgemäßen Verfahrens den (optionalen) Schritt, bei dem eine Dichtmanschette auf der Dichthülse dichtend angeordnet wird.

Das in dem erfindungsgemäßen Abdichtungsset vorgesehene bzw. in dem Verfahren verwendete Dichtmittel kann beispielsweise eine spritzfähige Dichtmasse sein, die vorzugsweise aus Silikon hergestellt ist. Alternativ oder zusätzlich kann das mindestens eine in dem erfindungsgemäßen Abdichtungsset vorgesehene bzw. in dem Verfahren verwendete Dichtmittel ein ringförmig oder hülsenförmig ausgebildetes Dichtmittel sein. Ein solches Dichtmittel lässt sich schnell durch Einschieben bzw. Einpressen desselben in den Spalt einbringen. Vorzugsweise ist das ringförmig oder hülsenförmig ausgebildete Dichtmittel aus Kunststoff, insbesondere aus Hartkunststoff, z.B. aus Polypropylen, Polyethylen oder Polyethylenterephthalat, hergestellt.

Eine weitere Ausgestaltung der Erfindung ist dadurch gekennzeichnet, dass das Dichtmittel zumindest abschnittsweise eine konisch ausgebildete Innenfläche und/oder eine konisch ausgebildete Außenfläche aufweist. Hierdurch wird das Einbringen, insbesondere ein Einschieben des Dichtmittels in den Spalt zwischen Dichthülse und Leitungsverlängerung erleichtert. Die konische Ausbildung des Dichtmittels ist zudem für die Erzielung einer hohen Dichtwirkung vorteilhaft.

Eine weitere vorteilhafte Ausgestaltung der Erfindung sieht vor, dass das Dichtmittel ein C-förmiges Profil aufweist. Auch diese Ausgestaltung erleichtert das Einbringen, insbesondere ein Einschieben des Dichtmittels in den Spalt zwischen Dichthülse und Leitungsverlängerung, da sich ein als C-Profil ausgebildetes Dichtmittel gut an den Außendurchmesser der Leitungsverlängerung sowie den Innendurchmesser der Dichthülse hinsichtlich möglicher Toleranzen dieser Durchmesser anpassen kann. Das als C-Profil ausgebildete Dichtmittel lässt zu, das Leckagewasser, welches möglicherweise an einer undichten Verbindung zwischen Verlängerungsstück und Unterputz-Wasserleitung austritt, an dem der Unterputz-Wasserleitung abgewandten Ende der Dichthülse bzw. an der Sanitärarmatur austritt, so dass die Leckage bemerkt und gegebenenfalls durch Nachbessern der undichten Verbindung beseitigt werden kann. Über die aufgrund des C-Profils vorhandene Lücke bzw. Öffnung des Dichtmittels könnte zwar auch Leckagewasser, welches möglicherweise an einer undichten Verbindung zwischen Verlängerungsstück und Sanitärarmatur austritt, in den Spalt zwischen Dichthülse und Leitungsverlängerung gelangen, jedoch ist dies ohne hohe Relevanz, da solches Leckagewasser zumindest auch oder eher nur an der Außenseite der Wand abfließen dürfte, die Leckage bemerkt und gegebenenfalls durch Nachbessern der undichten Verbindung beseitigt werden kann.

Ferner kann einem Eindringen von Wasser in den Spalt zwischen Dichthülse und Leitungsverlängerung entgegengewirkt werden, wenn gemäß einer weiteren Ausgestaltung der Erfindung die Dichthülse eine konisch ausgebildete Innenfläche aufweist, deren Innendurchmesser sich ausgehend von einem Verbindungsabschnitt, mit dem die Dichthülse auf dem Anschlussstutzen dichtend montierbar ist, in Richtung des wandaußenseitigen Endes der Dichthülse erweitert. Andererseits wird hierdurch auch die Abdichtung der betreffenden Wand hinsichtlich Leckagewassers, welches möglicherweise an einer undichten Verbindung zwischen Verlängerungsstück und Unterputz-Wasserleitung austritt, verbessert, da solches Leckagewasser bei der sich konisch in Richtung des wandaußenseitigen Endes erweiterten Innenfläche der Dichthülse einfacher und damit eher in Richtung des wandaußenseitigen Endes der Dichthülse abfließt. Der innere Konuswinkel der Dichthülse muss nicht besonders groß sein; er kann beispielsweise im Bereich von 2° bis 10°, insbesondere im Bereich von 2° bis 8° liegen.

Eine weitere Ausgestaltung der Erfindung ist dadurch gekennzeichnet, dass das Abdichtungsset einen Rohrwinkel mit einer angeformten Befestigungsscheibe aufweist, wobei der Anschlussstutzen an dem Rohrwinkel ausgebildet ist, wobei der Anschlussstutzen an seinem Außenumfang mindestens eine Vertiefung, vorzugsweise eine Ringnut aufweist, und wobei die Dichthülse an ihrem Innenumfang einen der Vertiefung zugeordneten radialen Vorsprung aufweist, der im montierten Zustand der Dichthülse in die Vertiefung eingreift. Durch diese Ausgestaltung wird eine verbesserte axiale Lagefixierung der Dichthülse auf dem Anschlussstutzen des Rohrwinkels erreicht. Die Vertiefung lässt sich dabei, insbesondere wenn diese als Ringnut ausgeführt ist, mit glatter Oberfläche ausführen. Beispielsweise kann die Ringnut durch spanabhebendes Bearbeiten des Anschlussstutzens hergestellt werden. Die glatte Oberfläche der Ringnut, die z. B. durch Feinschleifen erzeugt werden kann, begünstigt eine optimale Dichtwirkung der Dichthülse an dem Anschlussstutzen, wobei der Anschlussstutzen bzw. der Rohrwinkel als Metallgussteil mit rauer Oberfläche, beispielsweise als Rotgussteil ausgeführt sein kann.

Eine weitere Ausgestaltung der Erfindung ist dadurch gekennzeichnet, dass das Abdichtungsset einen Rohrwinkel mit einer angeformten Befestigungsscheibe aufweist, wobei der Anschlussstutzen an dem Rohrwinkel ausgebildet ist, wobei der Anschlussstutzen an seinem Außenumfang mindestens einen umlaufenden glatten Oberflächenbereich aufweist, der eine gemittelte Rautiefe Rz von kleiner als 0,8 µm, vorzugsweise kleiner als 0,6 µm, besonders bevorzugt kleiner als 0,2 µm aufweist, und wobei die Dichthülse an ihrem Innenumfang einen dem umlaufenden glatten Oberflächenbereich zugeordneten radialen Vorsprung aufweist, der im montierten Zustand der Dichthülse an dem glatten Oberflächenbereich anliegt. Der umlaufende glatte Oberflächenbereich begünstigt eine optimale Dichtwirkung der Dichthülse an dem Anschlussstutzen, wobei der Anschlussstutzen bzw. der Rohrwinkel als Metallgussteil, z. B. als Rotgussteil ausgeführt sein kann, welches benachbart zu dem umlaufenden glatten Oberflächenbereich eine raue Oberfläche aufweisen kann.

Vorzugsweise umfasst das erfindungsgemäße Abdichtungsset des Weiteren eine Dichtmanschette, die auf der Dichthülse dichtend anordenbar ist. Die Dichtmanschette kann beispielsweise aus einer flexiblen, wasserdichten Membran bestehen, die zur Durchleitung der Dichthülse eine Öffnung aufweist, deren Durchmesser etwas kleiner als der Außendurchmesser der Dichthülse ist. Der Rand der Öffnung der Dichtmanschette, z. B. ein die Öffnung definierender Kragen, kann aus elastisch nachgiebigem Material, z. B. aus Gummi oder einem Elastomer gefertigt sein. Des Weiteren ist zumindest eine Seite der Dichtmanschette mit einer Klebeschicht versehen. Hierdurch wird die Verbindung der Dichtmanschette, vorzugsweise eine wasserdichte Verbindung desselben mit einer Abdichtungsfolie vereinfacht.

Die vorliegende Erfindung betrifft insbesondere auch die Verwendung eines Abdichtungssets gemäß einer der oben genannten Ausgestaltungen zum Abdichten einer Wasserleitung im Bereich einer herzustellenden Wanddurchführung, wobei die Wasserleitung mit einem Anschlussstutzen zum Anschluss einer wandaußenseitig zugänglichen Sanitärarmatur versehen wird, und wobei in den Spalt zwischen der Dichthülse und der Leitungsverlängerung das mindestens eine Dichtmittel eingebracht wird.

Nachfolgend wird die Erfindung anhand einer mehrere Ausführungsbeispiele darstellenden Zeichnung näher erläutert. Es zeigen:
- Fig. 1: einen Abschnitt einer an einer Rohbauwand montierten Wasserleitung mit einem Anschlussstutzen zum Anschluss einer Sanitärarmatur und einer auf den Anschlussstutzen aufgesteckten Dichthülse, in einer Schnittansicht;
- Fig. 2: den Abschnitt der Wasserleitung aus Fig. 1, wobei vor der Rohbauwand eine Vorwand angeordnet ist, die eine Durchgangsöffnung für eine Wanddurchführung der Wasserleitung aufweist, in Schnittansicht;
- Fig. 3: den Abschnitt der Wasserleitung aus Fig. 2, wobei die Außenseite der Vorwand mit Fliesen oder Naturstein belegt ist und in den Anschlussstutzen eine Leitungsverlängerung eingeschraubt ist, wobei in dem Ringspalt zwischen Dichthülse und Leitungsverlängerung ein Dichtmittel eingebracht ist, in Schnittansicht;
- Fig. 4a: ein hülsenförmiges Dichtmittel in axialer Schnittansicht;
- Fig. 4b: ein weiteres Ausführungsbeispiel eines hülsenförmigen Dichtmittels in axialer Schnittansicht;
- Fig. 5a: ein drittes Ausführungsbeispiel eines hülsenförmigen Dichtmittels in einer Stirnseitenansicht; und
- Fig. 5b: das hülsenförmige Dichtmittel aus Fig. 5a in einer perspektivischen Ansicht.

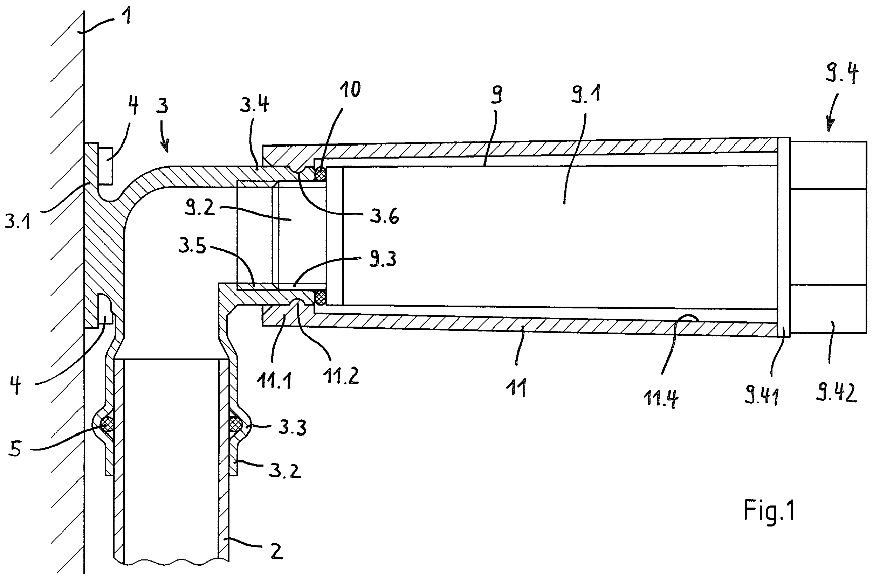

In den Fig. 1 bis 3 ist ein Abschnitt einer Rohbauwand 1 beispielsweise eines Badezimmers oder einer Küche dargestellt, an der eine Wasserleitung 2 mit einem Rohrwinkel 3 angeordnet ist. An dem Rohrwinkel 3 ist eine Befestigungsscheibe 3.1 einstückig angeformt, die Löcher zur Aufnahme von Befestigungsschrauben 4 aufweist. Ein solcher Rohrwinkel 3 wird auch als Wandscheibe bezeichnet. Der Rohrwinkel (Wandscheibe) 3 ist vorzugsweise als Metallgussteil aus Rotguss hergestellt.

Zum Anschluss der Wasserleitung 2 weist der Rohrwinkel 3 beispielsweise einen als Pressfitting ausgeführten Anschlussstutzen 3.2 auf. An dem Anschlussstutzen 3.2 ist ein Ringwulst 3.3 ausgebildet, der in der Innenfläche des Anschlussstutzens 3.2 eine Ringnut definiert, in die ein gummielastischer Dichtring (O-Ring) 5 eingesetzt ist. Der Anschlussstutzen 3.2 ist plastisch verformbar, so dass das darin zuvor eingesteckte Ende der Wasserleitung 2 kraftschlüssig mit dem Rohrwinkel 3 verbindbar ist und der Dichtring 5 wasserdicht gegen den Außenumfang der Leitung 2 sowie gegen den Innenumfang des Anschlussstutzens 3.2 gepresst wird.

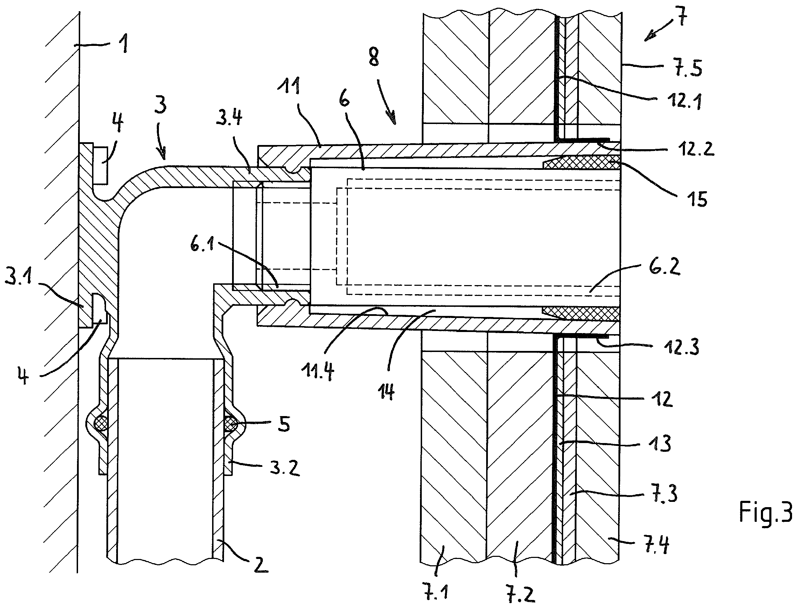

Der Rohrwinkel 3 weist einen zweiten Anschlussstutzen 3.4 auf, dessen Mittelachse gegenüber der Mittelachse des mit dem Ende der Wasserleitung 2 verbundenen Anschlussstutzens 3.2 um vorzugsweise ca. 90° abgewinkelt ist. Der Anschlussstutzen 3.4 dient dem Anschluss einer Sanitärarmatur (nicht gezeigt), bei es sich beispielsweise um einen Wasserhahn, ein Waschtisch-Eckventil, eine Wassermischarmatur oder eine Kopfbrause handeln kann. Für den Anschluss einer solchen Sanitärarmatur weist der Anschlussstutzen 3.4 ein Innengewinde auf, in das üblicherweise eine ein entsprechendes Außengewinde 6.1 aufweisende Leitungsverlängerung 6, auch Hahnverlängerung genannt, eingeschraubt wird (vgl. Fig. 3). Die rohrförmige Leitungsverlängerung 6 hat ihrerseits ebenfalls ein Innengewinde 6.2 zum Anschluss der Sanitärarmatur.

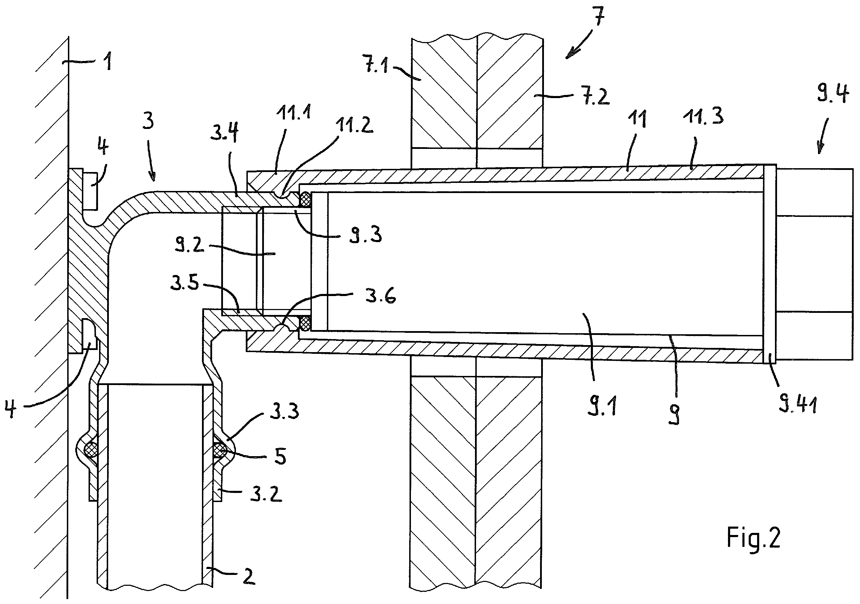

Die Wasserleitung 2 wird als Unterputz-Wasserleitung ausgeführt, indem nach ihrer Installation einschließlich der Befestigung des Rohrwinkels 3 an der Rohbauwand 1 vor derselben eine Vorwand 7 errichtet wird. Die Vorwand 7 wird beispielsweise aus einem fachwerkartigen Trägergestell (nicht gezeigt) und daran angebrachten Bauplatten 7.1, 7.2, beispielsweise wasserresistenten Gipskartonplatten gebaut. Vorzugsweise wird das Trägergestell dabei mit wasserresistenten Gipskartonplatten 7.1, 7.2 doppelt beplankt (vgl. Fig. 2).

Für die an der Außenseite der Vorwand 7 zugängliche Sanitärarmatur (nicht gezeigt), z. B. ein Wasserhahn, wird in der Vorwand 7 eine Wanddurchführung 8 hergestellt. Hierzu wird zeitlich vor dem Verkleiden des Trägergestells mit den Bauplatten 7.1, 7.2 zunächst ein Dichtstopfen (Baustopfen) 9 in den Anschlussstutzen 3.4 eingeschraubt, der später für die Montage der Leitungsverlängerung 6 wieder entfernt wird. Der Dichtstopfen 9 hat einen aus Kunststoff gefertigten Schaft 9.1, der an seinem dem Anschlussstutzen 3.4 zugeordneten Ende mit einem aus Metall, z. B. Messing gefertigten Verbindungsabschnitt 9.2 versehen ist, welcher ein dem Innengewinde 3.5 des Anschlussstutzens 3.4 entsprechendes Außengewinde 9.3 aufweist. Auf dem Außengewinde 9.3 bzw. dem Verbindungsabschnitt 9.2 ist ein gummielastischer Dichtring 10 angeordnet, der im montierten Zustand des Dichtstopfens 9 dichtend gegen die Stirnfläche des Anschlussstutzens 3.4 gepresst wird. Der mit dem Anschlussstutzen 3.4 wasserdicht verbundene Dichtstopfen 9 ermöglicht eine Druckprüfung bzw. Dichtigkeitsprüfung der Wasserleitung 2 und der daran angebrachten Pressfittinge 3.2 und Rohrwinkel 3. Zudem verhindert der Dichtstopfen 9 während der Bauphase der Vorwand 7 ein ungewolltes Eindringen von Fliesenkleber oder anderem Baumaterial in den Rohrwinkel 3 und die Wasserleitung 2.

An dem dem Verbindungsabschnitt 9.2 entgegengesetzten Ende des Schaftes 9.1 hat der Dichtstopfen 9 einen durchmessererweiterten Kopf 9.4. Der Kopf 9.4 hat einen kreiszylindrischen Abschnitt 9.41, der gegenüber dem Schaft 9.1 radial vorsteht und einen Absatz bzw. einen Anschlag definiert. Zudem hat der Kopf 9.4 einen als Mehrkant, beispielsweise als Sechskant ausgebildeten Abschnitt 9.42, der als manueller Griff bzw. als formschlüssige Ansatzfläche für ein entsprechendes Werkzeug dient. Die Länge des Schaftes 9.1 des Dichtstopfens ist vorzugsweise so bemessen, dass der Kopf 9.4 mit ausreichendem Abstand vor der herzustellenden Vorwand 7, einschließlich eines daran angebrachten Belages aus z. B. Wandfliesen oder Naturstein, endet.

Der Dichtstopfen 9 sowie die in Fig. 3 dargestellte Leitungsverlängerung 6 sind Komponenten eines erfindungsgemäßen Abdichtungssets zum Abdichten einer Wasserleitung 2 im Bereich einer herzustellenden Wanddurchführung 8. Das Abdichtungsset umfasst zudem eine Dichthülse 11, die auf den Anschlussstutzen 3.4 dichtend montierbar ist. Hierzu ist Dichthülse 11 beispielsweise, wie in Fig. 1 gezeigt, auf den Anschlussstutzen 3.4 aufsteckbar. Die Dichthülse 11 ist zumindest in ihrem auf den Anschlussstutzen 3.4 aufsteckbaren Endabschnitt 11.1 aus elastischem, vorzugsweise gummielastischem Material hergestellt, so dass der Endabschnitt 11.1 der Dichthülse im montierten Zustand mit radialer Pressspannung am Außenumfang des Anschlussstutzens 3.4 dichtend anliegt.

Der Innendurchmesser der Dichthülse 11 ist größer als der Außendurchmesser des Schaftes 9.1 des Dichtstopfens 9, während der Außendurchmesser des kreiszylindrischen Abschnitts des Kopfes 9.4 des Dichtstopfens 9 im Wesentlichen dem Außendurchmesser der Dichthülse 11 entspricht oder etwas größer als der Außendurchmesser der Dichthülse 11 ist. Der Dichtstopfen 9 ist somit in der Dichthülse 11 anordenbar, wobei die Dichthülse 11 beim Einschrauben des Dichtstopfens 9 in den Anschlussstutzen 3.4 am Kopf 9.4 des Dichtstopfens anliegt und dabei auf den Anschlussstutzen 3.4 aufgeschoben wird.

Die Dichthülse 11 weist an ihrem Innenumfang vorzugsweise einen umlaufenden radialen Vorsprung 11.2 auf, der eine hohe Dichtwirkung gegenüber dem Anschlussstutzen 3.4 sicherstellt. Der Anschlussstutzen 3.4 kann dabei an seinem Außenumfang eine Ringnut 3.6 aufweisen, in die der umlaufende Vorsprung 11.2 eingreift. Die Ringnut 3.6 weist eine glatte Oberfläche auf, deren gemittelte Rautiefe Rz vorzugsweise kleiner als 0,8 µm, insbesondere kleiner als 0,6 µm, besonders bevorzugt kleiner als 0,2 µm beträgt.

Alternativ zu der Ringnut 3.6 kann der Anschlussstutzen 3.4 an seinem Außenumfang einen umlaufenden glatten Oberflächenbereich aufweisen, der eine gemittelte Rautiefe Rz von kleiner als 0,8 µm, vorzugsweise kleiner als 0,6 µm, besonders bevorzugt kleiner als 0,2 µm aufweist.

Ferner liegt es auch im Rahmen der vorliegenden Erfindung, dass der Anschlussstutzen 3.4 anstelle der Ringnut 3.6 oder des umlaufenden glatten Oberflächenbereichs ein Außengewinde (nicht gezeigt) und die Dichthülse 11 ein entsprechendes Innengewinde (nicht gezeigt) für eine dichtende Verbindung von Dichthülse 11 und Anschlussstutzen 3.4 aufweisen.

Sofern der Anschlussstutzen gemäß der in Fig. 1 gezeigten Ausgestaltung oder gemäß einer der beiden anderen vorgenannten Varianten ausgeführt ist, umfasst das Abdichtungsset auch den entsprechend ausgeführten Rohrwinkel 3 mit der angeformten Befestigungsscheibe 3.1.

Die Länge der Dichthülse 11 ist vorzugsweise ebenfalls so bemessen, dass ihr dem Kopf 9.4 des Dichtstopfens 9 zugewandtes Ende 11.3 mit Abstand vor der herzustellenden Vorwand 7, einschließlich eines daran angebrachten Wandbelages aus z. B. Wandfliesen, endet. Auf die am Anschlussstutzen 3.4 montierte Dichthülse 11 wird nach der Beplankung des Trägergestells (nicht gezeigt) mit Bauplatten 7.1, 7.2 , z. B. wasserresistenten Gipskartonplatten, eine Dichtmanschette 12 aufgezogen.

Die Dichtmanschette 12 ist eine optionale, jedoch bevorzugte Komponente des erfindungsmäßen Abdichtungssets. Sie besteht aus einem wasserundurchlässigen Flächengebilde 12.1, welches mit einer im Wesentlichen runden Öffnung 12.2 zur Durchführung der Dichthülse 11 versehen ist. An der Öffnung weist die Dichtmanschette 12 einen gummielastischen Kragen 12.3 auf, der die hindurchgeführte Dichthülse 11 wasserdicht umschließt. Das Flächengebilde 12.1 der Dichtmanschette wird mit der Außenseite der Bauplatte 7.2 verklebt. Hierzu ist das Flächengebilde 12.1 vorzugsweise einseitig mit Klebstoff beschichtet. Auf die an die Außenseite der Bauplatte 7.2 angeklebte Dichtmanschette 12 wird anschließend vorzugsweise eine wasserundurchlässige Folie 13 aufgebracht. Auf die Folie 13 folgen dann Schichten aus Fliesenkleber 7.3 und Wandfliesen 7.4 oder dergleichen (vgl. Fig. 3).

Nach der Fertigstellung der Vorwand 7 einschließlich des Fliesenbelages 7.4 wird der Dichtstopfen 9 aus dem Anschlussstutzen 3.4 herausgedreht und aus der auf dem Anschlussstutzen 3.4 verbleibenden Dichthülse 11 entfernt. Die Dichthülse 11 ist aus gut schneidbarem Material, vorzugsweise aus Kunststoff, z. B. einem Elastomer hergestellt. Die Dichthülse 11 kann somit nach Fertigstellung der Vorwand 7 im Wesentlichen flächenbündig zu der Außenseite 7.5 des Wandbelages 7.4 mittels eines Schneidwerkzeugs, z. B. einem Messer, gekürzt werden. Nach dem Kürzen der Dichthülse 11 wird in den Anschlussstutzen 3.4 die Leitungsverlängerung (Hahnverlängerung) 6 eingeschraubt. Die Leitungsverlängerung 6 wird so gewählt, dass sie im montierten Zustand an der Außenseite 7.5 des Wandbelages 7.4 bündig abschließt oder nahe an der Außenseite 7.5 endet. Die rohrförmige, im Wesentlichen kreiszylindrische Leitungsverlängerung 6 ist vorzugsweise aus Metall, z. B. aus Rotguss hergestellt. Auf dem das Außengewinde 6.1 aufweisenden Verbindungsabschnitt der Leitungsverlängerung 6 kann - ebenso wie bei dem Dichtstopfen 9 - ein Dichtring (nicht gezeigt) angeordnet sein.

Der Außendurchmesser der zylindrischen Leitungsverlängerung 6 ist kleiner als der Innendurchmesser der Dichthülse 11, so dass sich nach Verbinden der Leitungsverlängerung 6 mit dem Anschlussstutzen 3.4 ein Spalt 14 zwischen der Dichthülse 11 und der Leitungsverlängerung 6 ergibt. Die Innenfläche der Dichthülse 11 kann dabei kreiszylindrisch ausgebildet sein. Vorzugsweise weist die Dichthülse 11 jedoch eine konisch ausgebildete Innenfläche 11.4 auf, deren Innendurchmesser ausgehend von dem Verbindungsabschnitt 11.1, mittels dem die Dichthülse 11 auf dem Anschlussstutzen 3.4 dichtend montierbar ist, in Richtung des wandaußenseitigen Endes 11.3 der Dichthülse 11 zunimmt (vgl. Fig. 1 bis 3). Der innere Konuswinkel der Dichthülse 11 ist relativ klein. Er kann beispielsweise im Bereich von 2° bis 10°, insbesondere im Bereich von 2° bis 8° liegen.

Das erfindungsgemäße Abdichtungsset umfasst des Weiteren mindestens ein in den Spalt 14 zwischen Dichthülse 11 und Leitungsverlängerung 6 einbringbares Dichtmittel 15. Bei dem Dichtmittel 15 kann es sich beispielsweise um eine Dichtmasse aus Silikon handeln, die im unvernetzten Zustand spitzfähig ist. Vorzugsweise besteht das Dichtmittel 15 aber aus einem ringförmigen oder hülsenförmigen Bauteil, welches aus Kunststoff, beispielsweise aus gut schneidbarem Hartkunststoff, hergestellt ist.

Um das Einführen des Dichtmittels 15 in den Spalt 14 zwischen Dichthülse 11 und Leitungsverlängerung 6 zu erleichtern, weist das Dichtmittel 15 vorzugsweise zumindest abschnittsweise eine konisch ausgebildete Innenfläche 15.1 und/oder eine konisch ausgebildete Außenfläche 15.2 auf. Diese Ausgestaltung trägt auch zu einer hohen Abdichtwirkung des in den Spalt 14 eingebrachten Dichtmittels 15 bei.

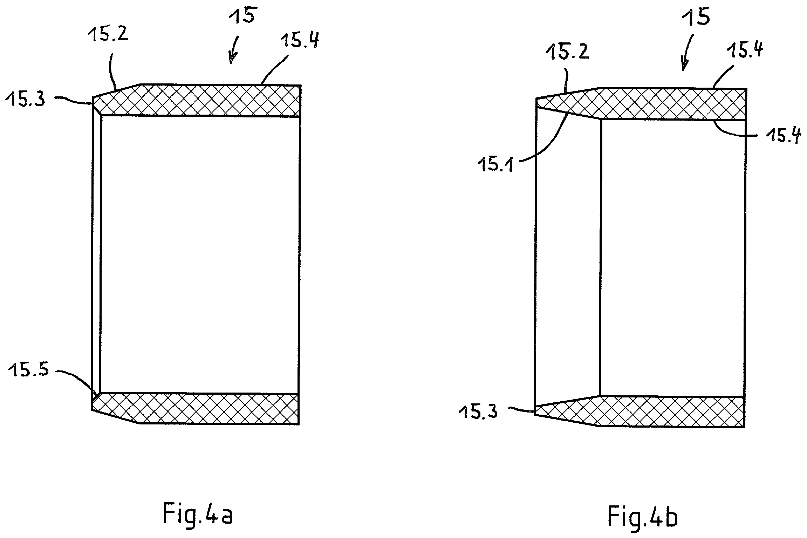

In den Figuren 4a bis 5b sind verschiedene Ausführungsformen des Dichtmittels 15 skizziert. Das in Fig. 4a gezeigte hülsenförmige Dichtmittel 15 hat ein Einführungsende, welches eine konisch ausgebildete Außenfläche 15.2 aufweist, deren Außendurchmesser sich zum Stirnende 15.3 des Dichtmittels 15 hin verjüngt. Ein größerer Längenabschnitt 15.4 der Außenfläche, welcher sich an das Einführungsende anschließt, ist kreiszylindrisch ausgebildet. Ferner ist zu erkennen, dass die Innenkante des Einführungsendes mit einer umlaufenden Fase (Abschrägung) 15.5 versehen ist.

Das in Fig. 4b gezeigte hülsenförmige Dichtmittel 15 hat ein Einführungsende, welches eine konisch ausgebildete Außenfläche 15.2 und eine konisch ausgebildete Innenfläche 15.1 aufweist. Größere Längenabschnitte 15.4 des Dichtmittels, welche sich an das Einführungsende anschließen, sind jeweils kreiszylindrisch ausgebildet.

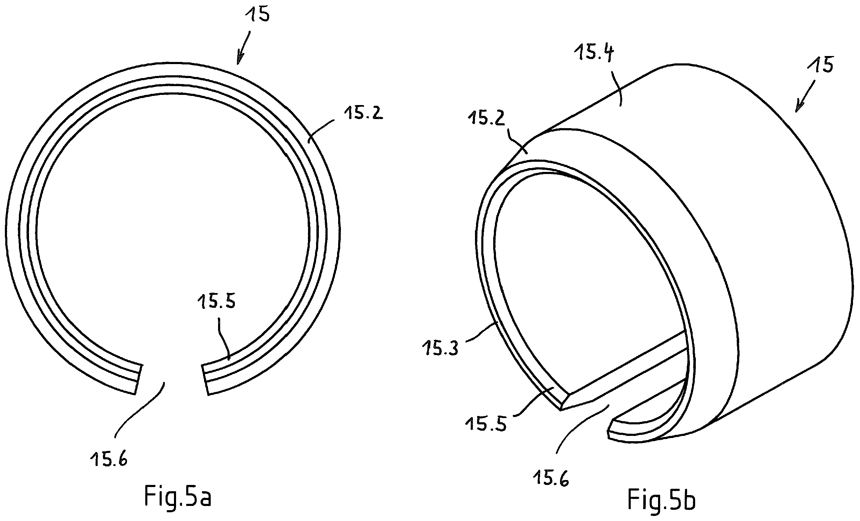

Das in den Fig. 5a und 5b dargestellte hülsenförmige Dichtmittel 15 weist im Vergleich zu dem in Fig. 4a gezeigten Beispiel einen durchgehenden axialen Spalt 15.6 auf. Das Dichtmittel 15 hat somit ein im Wesentlichen C-förmiges Profil.

Die Ausführung der Erfindung ist nicht auf die in der Zeichnung dargestellten Ausführungsbeispiele beschränkt. Vielmehr sind zahlreiche Varianten denkbar, die auch bei einer von den gezeigten Beispielen abweichenden Gestaltung von der in den beiliegenden Ansprüchen angegebenen Erfindung Gebrauch machen.

## Patentansprüche

1. Abdichtungsset zum Abdichten einer Wasserleitung im Bereich einer herzustellenden Wanddurchführung, wobei die Wasserleitung mit einem Anschlussstutzen (3.4) zum Anschluss einer wandaußenseitig zugänglichen Sanitärarmatur versehen ist, umfassend:
eine auf den Anschlussstutzen (3.4) dichtend montierbare Dichthülse (11),
einen Dichtstopfen (9) zum temporären wasserdichten Verschließen des Anschlussstutzens (3.4), wobei der Dichtstopfen (9) innerhalb der Dichthülse (11) anordenbar ist, und
eine Leitungsverlängerung (6) zum Verlängern des Anschlussstutzens (3.4) und zum Anschluss der Sanitärarmatur, wobei nach Lösen des Dichtstopfens (9) von dem Anschlussstutzen (3.4) und Entfernen des Dichtstopfens (9) aus der Dichthülse (11) die Leitungsverlängerung (6) innerhalb der Dichthülse (11) anordenbar und mit dem Anschlussstutzen (3.4) verbindbar ist, und wobei die Leitungsverlängerung (6) einen Außendurchmesser aufweist, der kleiner ist als der Innendurchmesser der Dichthülse (11), so dass sich nach Verbinden der Leitungsverlängerung (6) mit dem Anschlussstutzen (3.4) ein Spalt (14) zwischen der Dichthülse (11) und der Leitungsverlängerung (6) ergibt,
**dadurch gekennzeichnet, dass** das Abdichtungsset des Weiteren mindestens ein in den Spalt (14) einbringbares Dichtmittel (15) umfasst.

2. Abdichtungsset nach Anspruch 1, **dadurch gekennzeichnet, dass** das Dichtmittel (15) ringförmig oder hülsenförmig ausgebildet ist.

3. Abdichtungsset nach Anspruch 1 oder 2, **dadurch gekennzeichnet, dass** das Dichtmittel (15) aus Kunststoff hergestellt ist.

4. Abdichtungsset nach einem der Ansprüche 1 bis 3, **dadurch gekennzeichnet, dass** das Dichtmittel (15) zumindest abschnittsweise eine konisch ausgebildete Innenfläche und/oder eine konisch ausgebildete Außenfläche aufweist.

5. Abdichtungsset nach einem der Ansprüche 1 bis 4, **dadurch gekennzeichnet, dass** das Dichtmittel (15) ein C-förmiges Profil aufweist.

6. Abdichtungsset nach einem der Ansprüche 1 bis 5, **dadurch gekennzeichnet, dass** die Dichthülse (11) eine konisch ausgebildete Innenfläche aufweist, deren Innendurchmesser sich ausgehend von einem Verbindungsabschnitt (11.1), mit dem die Dichthülse (11) auf dem Anschlussstutzen (3.4) dichtend montierbar ist, in Richtung des wandaußenseitigen Endes (11.3) der Dichthülse (11) erweitert.

7. Abdichtungsset nach einem der Ansprüche 1 bis 6, **dadurch gekennzeichnet, dass** das Abdichtungsset des Weiteren einen Rohrwinkel (3) mit einer angeformten Befestigungsscheibe (3.1) aufweist, wobei der Anschlussstutzen (3.4) an dem Rohrwinkel (3) ausgebildet ist, wobei der Anschlussstutzen (3.4) an seinem Außenumfang mindestens einen umlaufenden glatten Oberflächenbereich aufweist, der eine gemittelte Rautiefe Rz von kleiner als 0,8 µm, vorzugsweise kleiner 0,6 µm, besonders bevorzugt kleiner als 0,2 µm aufweist, und wobei die Dichthülse (11) an ihrem Innenumfang einen dem umlaufenden glatten Oberflächenbereich zugeordneten radialen Vorsprung (11.2) aufweist, der im montierten Zustand der Dichthülse (11) an dem glatten Oberflächenbereich anliegt.

8. Abdichtungsset nach einem der Ansprüche 1 bis 7, **dadurch gekennzeichnet, dass** das Abdichtungsset des Weiteren einen Rohrwinkel (3) mit einer angeformten Befestigungsscheibe (3.1) aufweist, wobei der Anschlussstutzen (3.4) an dem Rohrwinkel (3) ausgebildet ist, wobei der Anschlussstutzen (3.4) an seinem Außenumfang mindestens eine Vertiefung, vorzugsweise eine Ringnut (3.6) aufweist, und wobei die Dichthülse (11) an ihrem Innenumfang einen der Vertiefung zugeordneten radialen Vorsprung (11.2) aufweist, der im montierten Zustand der Dichthülse (11) in die Vertiefung eingreift.

9. Abdichtungsset nach einem der Ansprüche 1 bis 8, **dadurch gekennzeichnet, dass** das Abdichtungsset des Weiteren eine Dichtmanschette (12) aufweist, die auf der Dichthülse (11) dichtend anordenbar ist.

10. Verfahren zum Abdichten einer Wasserleitung im Bereich einer herzustellenden Wanddurchführung, wobei die Wasserleitung einen Anschlussstutzen (3.4) zum Anschluss einer wandaußenseitig zugänglichen Sanitärarmatur aufweist, vorzugsweise unter Verwendung eines Abdichtungssets gemäß einem der Ansprüche 1 bis 9, umfassend die Schritte:
Montieren einer Dichthülse (11) auf dem Anschlussstutzen (3.4), so dass die Dichthülse (11) den Anschlussstutzen (3.4) wasserdicht einfasst und von dem Anschlussstutzen (3.4) in Richtung der herzustellenden Wanddurchführung vorsteht,
Verbinden einer Leitungsverlängerung (6) mit dem Anschlussstutzen (3.4), um den Anschlussstutzen (3.4) für den Anschluss der Sanitärarmatur zu verlängern, wobei die Leitungsverlängerung (6) innerhalb der auf dem Anschlussstutzen (3.4) montierten Dichthülse (11) angeordnet wird, und wobei die Leitungsverlängerung (6) einen Außendurchmesser aufweist, der kleiner ist als der Innendurchmesser der Dichthülse (11), so dass sich nach Verbinden der Leitungsverlängerung (6) mit dem Anschlussstutzen (3.4) ein Spalt (14) zwischen der Dichthülse (11) und der Leitungsverlängerung (6) ergibt, und
Einbringen mindestens eines Dichtmittels (15) in den Spalt (14) zwischen der Dichthülse (11) und der Leitungsverlängerung (6).

11. Verfahren nach Anspruch 10, **dadurch gekennzeichnet, dass** das verwendete Dichtmittel (15) eine spritzfähige Dichtmasse, vorzugsweise aus Silikon, und/oder ein ringförmig oder hülsenförmig ausgebildetes Dichtmittel ist.

12. Verfahren nach Anspruch 10 oder 11, des Weiteren umfassend den Schritt: Temporäres wasserdichtes Verschließen des Anschlussstutzens (3.4) mittels eines Dichtstopfens (9), wobei der Dichtstopfen (9) hierzu vor dem Verbinden der Leitungsverlängerung (6) mit dem Anschlussstutzen (3.4) innerhalb der Dichthülse (11) angeordnet wird.

13. Verfahren nach einem der Ansprüche 10 bis 12, des Weiteren umfassend den Schritt:
Dichtendes Anordnen einer Dichtmanschette (12) auf der Dichthülse (11).

14. Verwendung eines Abdichtungssets gemäß einem der Ansprüche 1 bis 9 zum Abdichten einer Wasserleitung im Bereich einer herzustellenden Wanddurchführung, wobei die Wasserleitung mit einem Anschlussstutzen (3.4) zum Anschluss einer wandaußenseitig zugänglichen Sanitärarmatur versehen wird, und wobei in den Spalt (14) zwischen der Dichthülse (11) und der Leitungsverlängerung (6) das mindestens eine Dichtmittel (15) eingebracht wird.
